(19) Européisches Patentamt / European Patent Office / Office européen des brevets

(11) EP 4 741 339 A1

(12) EUROPEAN PATENT APPLICATION
published in accordance with Art. 153(4) EPC

(43) Date of publication:
13.05.2026 Bulletin 2026/20

(21) Application number: 24835879.8

(22) Date of filing: 14.06.2024

(51) International Patent Classification (IPC):
C01B 32/05 (2017.01)     H01G 11/32 (2013.01)
H01G 11/34 (2013.01)     H01G 11/42 (2013.01)
H01G 11/44 (2013.01)     H01G 11/86 (2013.01)
H01M 4/587 (2010.01)     H01M 4/88 (2006.01)
H01M 4/96 (2006.01)

(52) Cooperative Patent Classification (CPC):
C01B 32/05; H01G 11/32; H01G 11/34;
H01G 11/42; H01G 11/44; H01G 11/86;
H01M 4/587; H01M 4/88; H01M 4/96

(86) International application number:
PCT/JP2024/021743

(87) International publication number:
WO 2025/009364 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2023 JP 2023110575
22.04.2024 JP 2024069190

(71) Applicant: Panasonic Holdings Corporation
Kadoma-shi, Osaka 571-8501 (JP)

(72) Inventors:
• KUWABARA, Ryou
Suita-shi, Osaka 564-8680 (JP)

• OIKAWA, Kazuma
Suita-shi, Osaka 564-8680 (JP)
• TANIGUCHI, Nao
Suita-shi, Osaka 564-8680 (JP)
• SAKAGUCHI, Shigeki
Suita-shi, Osaka 564-8680 (JP)
• TANAKA, Shunsuke
Suita-shi, Osaka 564-8680 (JP)
• KOBARI, Koichi
Suita-shi, Osaka 564-8680 (JP)
• HORINO, Toki
Suita-shi, Osaka 564-8680 (JP)
• KADOBAYASHI, Kenta
Suita-shi, Osaka 564-8680 (JP)

(74) Representative: Novagraaf International SA
Chemin de l'Echo 3
1213 Onex, Geneva (CH)

(54) POROUS CARBON MATERIAL, STORAGE BATTERY USING POROUS CARBON MATERIAL, POWER-GENERATING DEVICE USING POROUS CARBON MATERIAL, AND METHOD FOR PRODUCING POROUS CARBON MATERIAL

(57) A porous carbon material includes a calcined body, wherein the calcined body has a specific surface area of 500 to 3000 $m^2/g$, and the calcined body includes pores having a pore diameter of 100 nm or less, and the calcined body has a nitrogen content rate of 1 to 15 atomic%, with a remainder of the calcined body being carbon, and the calcined body has a biomass degree in a range of 5 to 100 pMC, the biomass degree being expressed as a ratio of a $^{14}C$ concentration ($^{14}C/^{12}C$) of the calcined body when measured using accelerator mass spectrometry (AMS) method to the $^{14}C$ concentration ($^{14}C/^{12}C$) of a standard sample not derived from fossil fuels.

Fig. 1A

Fig. 1B

(1)

| DISPERSION MEDIUM 101 | NITROGEN-CONTAINING BIOMASS STARTING MATERIAL 102 | METAL OXIDE NANOPARTICLES 103 | METAL COMPOUND PARTICLES 110 |

MIXING, FOAMING AND DISPERING STEP 104

PRECURSOR STARTING MATERIAL 105

(2)

FREEZING STEP 106

CALCINING STEP 107

(3)

WASHING STEP 108

POROUS CARBON MATERIAL109

**Description**

BACKGROUND OF THE INVENTION

1. Field of the Invention

The present disclosure relates to a porous carbon material, a power storage and generation device using the same, and a method for producing the porous carbon material.

2. Description of the Related Art

Toward achieving carbon neutrality, there is a strong demand for improved performance and spread of power storage devices, such as secondary batteries and capacitors, and power generation devices, such as fuel cells and solar cells. In many cases, the performance of these energy devices is specified by that of electrode materials. Carbon materials are promising as electrodes, but are required to reconcile a control technology for such as crystallinity, electrical conductivity, porosity, and an amount of surface functional groups with its economic efficiency. In particular, the porosity, that is, the size of a specific surface area, is an important factor for carbon materials applied to electrochemical devices.

As methods for producing a porous carbon material, mainly two methods are known, which are a method using a template and one not using a template.

A representative example of the porous carbon material not using a template is activated carbon. For example, activated carbon derived from coconut shells is obtained by calcining and carbonizing a part with relatively large amounts of pores, which is called as a shell (endocarp), to be activated with chemicals or steam as shown in JP-5168585B as Patent Document 1. However, there is a problem in that many functional groups including hydrogen and oxygen atoms, etc., present on a surface of the activated carbon cause side reactions during the operation of the energy devices, resulting in affecting long-term reliability of the devices.

As a porous carbon material using a template, a plant-based starting material such as rice and wheat straw is calcined to remove inorganic template components such as silica as shown in JP-2021-38103A as Patent Document 2. However, since natural inorganic components are used as templates, a porous carbon material with a desired pore diameter distribution was hard to obtain. There is a problem in that large amounts of waste liquids are generated by alkali/acid treatment for removing the silica remaining after calcination.

In addition, there is a porous carbon material that is obtained by calcining and carbonizing a mixture of a synthetic polymer serving as a carbon source and a template material, for template removal. The examples of the template include a soft template, such as surfactants, and a hard template using metal oxide nanoparticles such as silica, alumina, and magnesia as shown in JP-2019-102711A as Patent Documents 3 and JP-2021-084819A as Patent Document 4. In a method using a surfactant as the template, due to thermolability of micelles formed by the surfactant, micellar structures are destroyed in a process of heating, resulting in difficulty for controlling the pore diameter uniformly.

On the other hand, thermal stability of the metal oxide nanoparticles makes control on uniform pore diameter relatively easy, but they have a problem of requiring alkaline or acid washing, just like natural silica. Since the synthetic polymer is used as the carbon source, there is an issue of promoting use of starting materials not derived from fossil fuels, in terms of carbon footprint and life cycle assessment (LCA).

PRIOR ART DOCUMENTS

PATENT DOCUMENTS

Patent Document 1: JP-5168585B
Patent Document 2: JP-2021-38103A
Patent Document 3: JP-2019-102711A
Patent Document 4: JP-2021-084819A

SUMMARY

In one general aspect, the techniques disclosed here feature: a porous carbon material includes a calcined body,

wherein the calcined body has a specific surface area of 500 to 3000 $m^2/g$, and
the calcined body includes pores having a pore diameter of 100 nm or less, and

the calcined body has a nitrogen content rate of 1 to 15 atomic%, with a remainder of the calcined body being carbon, and

the calcined body has a biomass degree in a range of 5 to 100 pMC, the biomass degree being expressed as a ratio of a $^{14}C$ concentration ($^{14}C/^{12}C$) of the calcined body when measured using accelerator mass spectrometry (AMS) method to the $^{14}C$ concentration ($^{14}C/^{12}C$) of a standard sample not derived from fossil fuels.

In another general aspect, the techniques disclosed here feature: a method for producing a porous carbon material includes:

(1) preparing a precursor starting material by mixing, foaming, and dispersing a dispersion medium, a nitrogen-containing biomass starting material, and metal oxide nanoparticles as template particles with a number average particle size of 100 nm or less;
(2) calcining and graphitizing the precursor starting material to obtain a calcined body; and
(3) removing the metal oxide nanoparticles from the calcined body to obtain the porous carbon material.

BRIEF DESCRIPTION OF THE DRAWINGS

The present disclosure will become readily understood from the following description of non-limiting and exemplary embodiments thereof made with reference to the accompanying drawings, in which like parts are designated by like reference numeral and in which:

Fig. 1A shows in (1) to (3) a schematic diagram for explaining a method for producing a porous carbon material according to Examples 1 to 10 and Comparative Examples 1 and 2 in a first embodiment;
Fig. 1B shows in (1) to (3) a schematic diagram for explaining a method for producing a porous carbon material according to Examples 11 and 12 and Comparative Example 3 in the first embodiment;
Fig. 2A is a table showing a relationship between particle sizes of pore diameters and their names in IUPAC classification;
Fig. 2B is a schematic cross-sectional view showing diagrammatically micropores, mesopores, and macropores present in a cross section of the porous carbon material according to the first embodiment; and
Fig. 3 is a table showing starting materials, production conditions, and assessment results of Examples 1 to 12 and Comparative Examples 1 to 3.

DETAILED DESCRIPTION

Biomass such as rice husks uses natural inorganic components as templates, so that a microstructure of the resulting porous carbon material is non-uniform, leading a problem of generating a large amount of alkaline and acidic waste liquid when natural silica is removed from the templates. In a case that metal oxide nanoparticles are used as templates, the generation of a large amount of waste liquid is also a problem. The challenge is to reconcile establishing technology for precise control of pore diameters of the porous carbon materials with building an environmentally friendly production process using biomass starting materials.

The present inventors have found that nitrogen-doped porous carbon materials can be easily obtained by mixing, foaming, dispersing uniformly, and calcining a dispersion medium, biomass starting materials containing abundant nitrogen as organic precursor sources, and the metal oxide nanoparticles as templates to remove the templates from the calcined body, resulting in a porous carbon material according to one aspect of this disclosure and a producing method thereof.

The present disclosure is intended to solve the above-mentioned problems, and one non-limiting and exemplary embodiments provides an environmentally friendly porous carbon material using the biomass starting material.

According to the porous carbon material and the producing method thereof according to this disclosure, a nitrogen-containing porous carbon material with a large specific surface area, which has thitherto been difficult to obtain quickly and inexpensively, can be easily obtained by the environmentally friendly process using the nitrogen-containing biomass starting material and metal oxide nanoparticles which are present abundant in nature.

A porous carbon material according to a first aspect, includes a calcined body,

wherein the calcined body has a specific surface area of 500 to 3000 $m^2/g$, and
the calcined body includes pores having a pore diameter of 100 nm or less, and
the calcined body has a nitrogen content rate of 1 to 15 atomic%, with a remainder of the calcined body being carbon, and
the calcined body has a biomass degree in a range of 5 to 100 pMC, the biomass degree being expressed as a ratio of a

$^{14}$C concentration ($^{14}$C/$^{12}$C) of the calcined body when measured using accelerator mass spectrometry (AMS) method to the $^{14}$C concentration ($^{14}$C/$^{12}$C) of a standard sample not derived from fossil fuels.

In the porous carbon material according to a second aspect in addition to the first aspect, the pores include micropores having a pore diameter of 2 nm or less and mesopores having a pore diameter of 2 nm or more to 50 nm or less.

In the porous carbon material according to a third aspect in addition to the second aspect, the pores further include macropores having a pore diameter of 100 nm or more.

An electrode according to a fourth aspect, includes the porous carbon material according to any one of first to third aspect.

A device for storing or generating electricity according to a fifth aspect, includes the electrode according to the fourth aspect.

A method for producing a porous carbon material according to a sixth aspect, includes:

(1) preparing a precursor starting material by mixing, foaming, and dispersing a dispersion medium, a nitrogen-containing biomass starting material, and metal oxide nanoparticles as template particles with a number average particle size of 100 nm or less;
(2) calcining and graphitizing the precursor starting material to obtain a calcined body; and
(3) removing the metal oxide nanoparticles from the calcined body to obtain the porous carbon material.

In the method for producing a porous carbon material according to a seventh aspect in addition to the sixth aspect, the metal oxide nanoparticles as the template particles are ZnO particles.

In the method for producing a porous carbon material according to an eighth aspect in addition to the sixth or seventh aspect, the nitrogen-containing biomass starting material is at least one or more selected from a group consisting of natural sugars, proteins, and nucleic acids.

In the method for producing a porous carbon material according to a ninth aspect in addition to any one of the sixth to eighth aspects, the nitrogen-containing biomass starting material is at least one or more selected from a group consisting of gelatin, chitin, chitosan, glucosamine, deoxyribonucleic acid (DNA), ribonucleic acid (RNA).

In the method for producing a porous carbon material according to a tenth aspect in addition to any one of the sixth to ninth aspects, produced porous carbon material has a biomass degree of the nitrogen-containing biomass starting material is in a range of 5 to 100 pMC, the biomass degree being expressed as a ratio of a $^{14}$C concentration ($^{14}$C/$^{12}$C) of the nitrogen-containing biomass starting material as measured using accelerator mass spectrometry (AMS) method to the $^{14}$C concentration ($^{14}$C/$^{12}$C) of a standard sample not derived from fossil fuels.

In the method for producing a porous carbon material according to an eleventh aspect in addition to any one of the sixth to tenth aspects, metal compound particles other than metal oxides are added as the precursor starting materials.

In the method for producing a porous carbon material according to a twelfth aspect in addition to the eleventh aspect, the metal compound particles are ZnCl$_2$ particles.

A porous carbon material and a producing method thereof according to embodiments will be described below.

(First Embodiment)

<Porous Carbon Material>

A porous carbon material according to the first embodiment of the present disclosure has a specific surface area of 500 to 3000 m$^2$/g, a pore diameter of 100 nm or less, and a nitrogen content rate of 1 to 15 atomic%, and the remainder is a carbon calcined body. The biomass degree is in a range of 5 to 100 pMC, which is expressed as a ratio of a $^{14}$C concentration ($^{14}$C/$^{12}$C) of the calcined body to that of a standard sample not derived from fossil fuels when measured using the accelerator mass spectrometry (AMS) method.

The above-mentioned porous carbon material can be obtained by heat calcining a mixture of biomass starting materials containing nitrogen as an organic substance and metal oxide nanoparticles as template particles. Although a method for removing template particles varies depending on types of oxide nanoparticles, the porous carbon material, which has been obtained after removing the template particles, contains 1 to 15 % of nitrogen atoms derived from the starting material and has a large specific surface area of 500 to 3000 m$^2$/g, resulting in structural properties suitable for use as an electrode material in energy devices.

For the porous carbon material of this embodiment, one property is to be produced from the biomass starting materials, and carbon contained in a framework of the resulting porous carbon material can be confirmed to be derived from biomass by using radiocarbon $^{14}$C measuring. The radiocarbon $^{14}$C can be analyzed, for example, using the accelerator mass spectrometry (AMS) method.

One of $^{14}$C properties is to be a radioactive isotope having a property of radioactively decaying into nitrogen ($^{14}$N)

with a half-life of 5730 years. On earth, infinitesimal amount of $^{14}C$ is constantly generated by an action of cosmic rays falling from space. After being oxidized into carbon dioxide $^{14}CO_2$ to disperse into the atmosphere, the generated $^{14}C$ is taken into plants and animals in the food chain to disappear according to its half-life while circulating through the environment via the food chain. This phenomenon is utilized to perform dating. Otherwise, human activities after Industrial Revolution have caused changes in natural $^{14}CO$ cycles. Use of fossil fuels such as petroleum and coal without carbon (called dead C) reduces an apparent $^{14}C$ concentration, while a $^{14}C$ concentration in the atmosphere has been sharply increased due to generation of $^{14}C$ (Bomb C) accompanying nuclear tests performed through about ten years since the 1950s. Therefore, carbon derived from organisms that have existed since 1950 is called modem C, and contains thousands of times more $^{14}C$ than fossil fuels.

Modern carbon from biomass is considered to have a $^{14}C/^{12}C$ ratio of approximately $2 \times 10^{-12}$, and the dead C from fossil fuels is considered to have a $^{14}C/^{12}C$ ratio of $2 \times 10^{-16}$ and less. This knowledge can be used to determine whether the carbon atoms in the framework structure are derived from biomass or not.

For example, synthetic polymers such as polyvinyl alcohols (PVA) are made from fossil fuels, so in a case that these are used in starting materials as organic precursors, the biomass degree of the resulting porous carbon material is 0 pMC and that of the resulting porous carbon material using only biomass starting materials is 100 pMC. The pMC (percent modem carbon) is used as a unit of the biomass degree, and the higher the value, the higher the biomass degree.

<Pore Properties of Porous Carbon Materials>

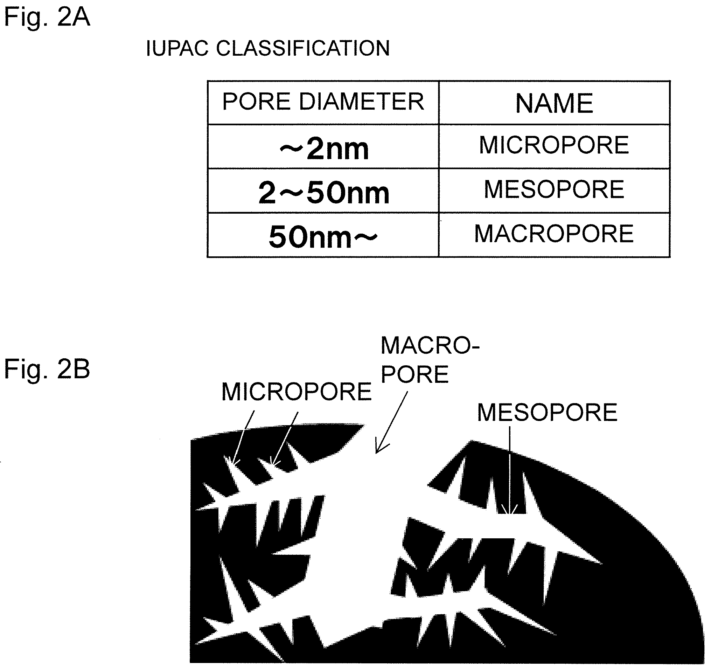

Fig. 2A is a table showing a relationship between particle sizes of pore diameters and their names in IUPAC classification. Fig. 2B is an outline cross-sectional view showing schematically micropores, mesopores, and macropores present in a cross section of the porous carbon material according to the first embodiment.

The specific surface area of the porous carbon material is preferably 500 to 3000 $m^2/g$, and more preferably 1000 to 3000 $m^2/g$.

Based on the JIS Z 8830:2013 (corresponding to ISO 9277:2010), the specific surface area of the porous carbon material is determined by $N_2$ gas adsorption measurement. Specifically, the amount of $N_2$ gas (=specific surface area) required to form a monolayer is calculated by performing a BET plot analysis on the desorption side of the $N_2$ gas adsorption/desorption isotherm.

In an average pore diameter distribution of the porous carbon material, as shown in Fig. 2B, micropores pores (up to 2nm) and mesopores (2 to 50 nm) are preferably contained, but 100 nm or less of macro-pores may be contained.

The average pore diameter distribution of the porous carbon materials is also determined by the $N_2$ gas adsorption measurement, based on JIS Z 8830 :2013 (corresponding to ISO 9277:2010), and is specifically determined by calculating from BJH analysis or DMF analysis of the $N_2$ gas adsorption/desorption isotherm.

<Electrode Containing Porous Carbon Material>

An electrode according to the first embodiment contains the above porous carbon material.

The porous carbon material according to the first embodiment is a calcined body having a specific surface area of 500 to 3000 $m^2/g$, a pore diameter of 100 nm or less, and a nitrogen content rate of 1 to 15 atomic% which can be obtained at least by calcining nitrogen-containing biomass starting materials, and is one with a biomass degree in a range of 5 to 100 pMC when measured by the accelerator mass spectrometry method (AMS method). Therefore, the porous carbon material of the present invention is suitable for a wide range of applications, such as an electrode material for power storage devices such as lithium-ion secondary batteries and electric double layer capacitors, and power generation devices such as fuel cells and solar cells.

<Starting Material for Porous Carbon Material: Nitrogen-containing Biomass as Organic Precursor>

In terms of carbon footprint and life cycle assessment (LCA), an organic precursor starting material for the porous carbon material according to the first embodiment is preferably nitrogen-containing biomass, and at least one or more selected from groups consisting of natural sugars, proteins, and nucleic acids are preferred. Specifically, at least one or more selected from groups consisting of gelatin, chitin, chitosan, glucosamine, deoxyribonucleic acid (DNA), and ribonucleic acid (RNP), which are relatively inexpensive and easily available, is preferred. For example, gelatin is a natural polymer with an average molecular weight of about 80,000, and is known as a naturally abundant and sustainable animal derivative. Gelatin forms a triple helix structure, and when heated, the helix structure is unraveled and the molecules become random coils, forming a sol. By cooling this, a three-dimensional network structure is formed to be a gel.

<Starting Material for Porous Material: Metal Oxide Nanoparticles as Template Particles>

As a type of template starting material for the porous carbon material according to the first embodiment, any known template material may be used, regardless of whether it is organic or inorganic, and use of thermally stable metal oxide nanoparticles, which do not change a shape of the template particles itself even at high temperatures, is preferred in terms of precise control of the pore diameter. For example, known general metal oxides such as zeolite, $SiO_2$, $Al_2O_3$, $Fe_2O_3$, MgO, CuO, $CeO_2$, $Y_2O_3$, and ZnO.

The shape of the template particles is not particularly limited and may be any shape, such as a sphere, an ellipse, a cube, a rectangular parallelepiped, a cylinder, or a cone. However, metal oxide nanoparticles with a sphere or ellipse shape can be generally obtained easily, so that the sphere or ellipse shape is preferred from an economic standpoint.

In terms of controlling the pore diameter distribution of the porous carbon material, particle size distribution of the template particles is preferably nanoparticles with a D50 whose diameter is 100 nm or less, and in order to further increase the specific surface area, nanoparticles with a D50 of 50 nm or less is more preferred.

<Starting Material for Porous Material: Metal Compound Particles as Additives>

In addition to the metal oxide nanoparticles, metal compound particles other than metal oxides may be added. These materials generate metal oxides during the calcining process, resulting the above-mentioned template effects. Along with that, the $O_2$ during calcining can be recovered, so that the starting material is restricted to become $CO_2$, and the yield improvement effect as the porous carbon material can be expected. As types of the compounds, for example, carbonates, chlorides, nitrides, sulfides, sulfates, hydroxides, and the like can be used.

<Method for Producing Porous Carbon Material>

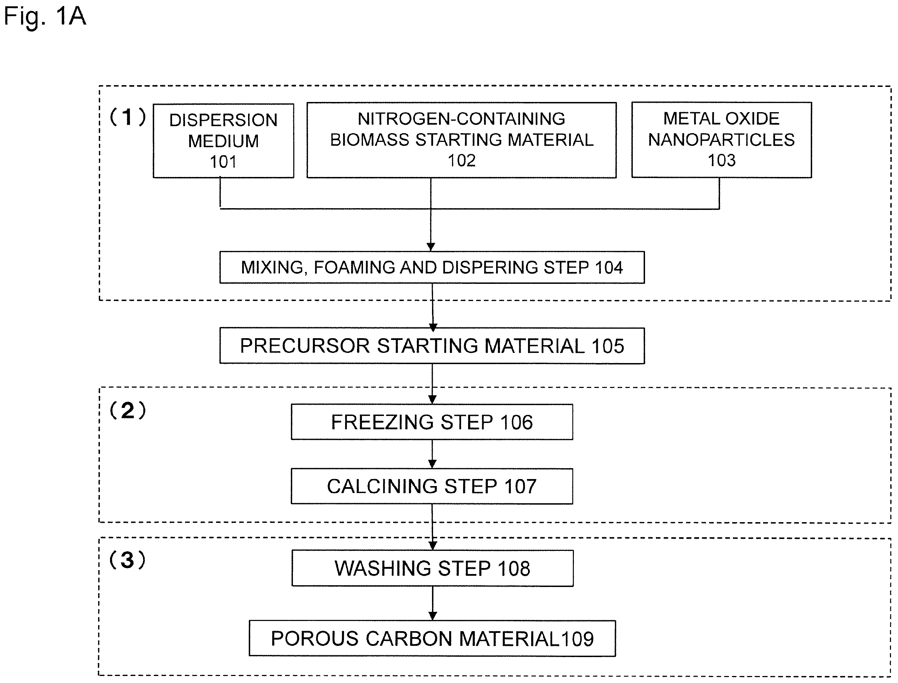

A method for producing porous carbon material 109 according to the first embodiment will be described with reference to Fig. 1A. The method for producing porous carbon material 109 includes steps (1) to (3).

(1) Preparation step of precursor starting material 105:

A dispersion medium 101, a biomass starting material 102 comprising at least one type of the nitrogen, and metal oxide nanoparticles 103 with a number average particle size of 100 nm or less as template particles are mixed, foamed, and dispersed in a mixing, foaming, and dispersing step 104 to prepare a precursor starting material 105.

(2) Graphitization step of precursor starting material 105:

The precursor starting material is calcined in a calcining step 107 to be graphitized, obtaining a calcined body.

(3) Removal step of metal oxide nanoparticles 103:

The metal oxide nanoparticles are removed from the calcined body by washing in a washing step 108 to obtain a porous carbon material 109.

Each step will be described in detail below:

(1) Preparation step of precursor starting material 105:

(1) in Fig. 1A is a diagram for explaining the preparation step. The dispersion medium 101, the nitrogen-containing biomass starting material 102, and the metal oxide nanoparticles 103 were mixed, formed, and dispersed in the mixing, foaming, and dispersing step 104 to prepare the precursor starting material 105. There is not limitation on how to mix and its order, however, for example, a mixture of the nitrogen-containing biomass starting material 102 and the dispersion medium 101 has been prepared, while a mixture of the metal oxide nanoparticles 103 and the dispersion medium 101 has been prepared, and finally the two mixtures above may be mixed. Moreover, for allowing for dispersing uniformly, the mixtures may be formed using e.g. an electric mixer and the like.

Obtaining a porous carbon material with uniform pore diameter by a complete "solid phase synthesis" without the use of the dispersion medium 101 is ideal in terms of productivity and economy, but mixing and dispersing the metal oxide nanoparticles 103 uniformly in an organic matrix without the dispersion medium 101 is difficult. In fact, in a case that gelatin and ZnO nanoparticles are used alone without adding water, the metal oxide nanoparticles 103 aggregate to be unevenly distributed, resulting in many areas where pores are not formed and a small specific surface area. Therefore, even a small amount of the dispersion medium 101 is preferably added. Since the nitrogen-containing biomass starting material 102 is hydrophilic, water is preferred as the dispersion medium 101, and a starting material blending ratio (weight ratio) is preferably, for example, gelatin:water:metal oxide nanoparticles=1:0.3 to 1:8 to 30.

On the other hand, regarding starting materials other than gelatin, for example, chitin even without the dispersion medium is mixed with the ZnO nanoparticles well and uniformly to form pore diameters, and has the specific surface area of more than 1000 $m^2$/g, so that the dispersion medium 101 is not necessary to be added depending on the starting materials. A starting material blending ratio (weight ratio) when the nitrogen-containing biomass starting material 102 is not gelatin is preferably, for example, nitrogen-containing biomass starting material (other than gelatin):water:metal oxide nanoparticles=1:0.3 to 1:0 to 30.

(2) Graphitization step of precursor starting material 105:

(2) in Fig. 1A is a diagram for explaining the graphitization step.

In a case that gelatin is included in the composition of the precursor starting material 105, freezing it at a temperature below -15 °C for more than one day prior to calcining is more advantageous for increasing the specific surface area. This is caused by the molecular structure of gelatin, since freezing promotes formation of a three-dimensional network structure of gelatin. At a stage of the precursor starting material 105, gelatin molecular chains randomly coiled self-organize to form a three-dimensional helical structure by cryopreservation, and this structure is considered to play an important role in formation of mesoporous structures during heating and calcining. In a freezing step 106 where the precursor starting material 105 is frozen, the material may be frozen by being cooled in a freezer, or may be frozen by being cooled rapidly with liquid nitrogen or the like, and the cooling rate until freezing is preferably at 1 to 100 °C/min, although there is no particular restriction on thereto. The preferred freezing storage time is 1 to 7 days in the freezer, and is 0.01 to 1 day when cooled rapidly with the liquid nitrogen.

This precursor starting material 105 is calcined at the calcining step 107 to obtain porous carbon material 109. The calcining step 107 aims to burn off heterogeneous elements other than carbon (such as hydrogen, oxygen, and nitrogen) contained in the nitrogen-containing biomass material 102 at a temperature range of 950 to 1200 °C, under an inert gas atmosphere. The temperature rising rate is acceptably 1 to 50 °C/min and is preferably 20 to 50 °C/min in terms of the productivity, although there is no particular restriction on thereto. The calcining time is preferably 1 to 10 hours, and more preferably 3 to 6 hours in terms of residual rates of the heterogeneous elements and the productivity.

(3) Removal step of metal oxide nanoparticles 103:

(3) in Fig. 1A is a diagram for explaining the removal step.

In a case that the ZnO nanoparticles are used as template particles, in the calcining process of (2), thermal reduction by carbon proceeds and ZnO becomes metallic Zn. This metallic Zn evaporates at around 906 °C to 907 °C, so that the template particles do not remain. In other words, only in a case that the ZnO nanoparticles are used, the washing step 108 where the template particles are dissolved and washed using acid or alkali is not required, and the porous carbon material 109 can be obtained without the washing step 108.

Since $SiO_2$, $Al_2O_3$, and MgO other than Zn are stable, in a case that these nanoparticles are used as template particles, the thermal reduction does not proceed, and the nanoparticles also coexist in the calcined body. Hence, the washing step 108 needs to dissolve and wash the template particles using the acid or the alkali. Thus, the materials from which the template particles have been removed are neutralized, washed with water, and dried to obtain the porous carbon material 109.

Thereafter, depending on the application, the graphitization may be promoted by further calcining at a high temperature. As the calcining conditions, for example, under the inert gas atmosphere, the calcining temperature is 1200 to 2200 °C, preferably 1400 to 2000 ° C. The calcining time is 1 to 10 hours, preferably 3 to 6 hours. The temperature rising rate is acceptably 1 to 50 °C/min, and is preferably 20 to 50 °C/min in terms of productivity, although there is not particular limitation thereto.

According to a method for producing a porous carbon material according to the embodiment, a calcined body with a specific surface area of 500 to 3000 $m^2$/g, a pore diameter of 100 nm or less, and a nitrogen content rate of 1 to 15 % can be obtained by freezing and calcining the precursor starting material 105 consisting of the nitrogen-containing biomass starting material 102, the metal oxide nanoparticles 103, and the dispersion medium 101. This allows for producing safely and inexpensively a porous carbon material with a large specific surface area.

(Examples)

The embodiment of the present disclosure will be described based on Examples. However, the embodiment is not limited to the following Examples.

Dispersion medium: Water (ultrapure water)
Carbon source: gelatin (Fujifilm Wako Pure Chemical Corporation), chitin (Fujifilm Wako Pure Chemical Corporation)
Template Particles:ZnO (Fujifilm Wako Pure Chemical Corporation, 0.02$\mu$m)

<Example 1>

The porous carbon material was fabricated under the following conditions.

5ml of water and 0.5g of gelatin were added to a 50ml beaker to be soaked for ten minutes. Then, 5g of water heated up to 60 °C was added and stirred with a stirrer to obtain a mixed solution. A weight ratio of gelatin, ZnO nanoparticles, and ultrapure water was 1:1:20. This precursor material was placed in the freezer and frozen at -20 °C for one day. The frozen precursor was then placed in an alumina boat-shaped crucible to be heated up to 950 °C under a nitrogen atmosphere (N2 purity:99.9 %, N2 flow 70 ml/min) at a temperature rising rate of 10 °C/min, and was then retained for two hours to be calcined. The porous carbon material was obtained with a yield of 10.2 %.

· Measurement of a specific surface area $S_{BET}$ of the porous carbon material

A specific surface area $S_{BET}$ of the porous carbon material was determined by N2 gas adsorption measurement based on JIS Z 8830:2013 (corresponding to ISO 9277:2010). A specific surface area $S_{BET}$ of the calcined body was 625 $m^2$/g, which was a relatively large value.

· Measurement of a total pore volume VT of all pores included in the porous carbon and a mesopore volume $V_{meso}$ of meso pores included in the porous carbon material.

A total pore volume VT of all pores included in the porous carbon and a mesopore volume $V_{meso}$ of meso pores included in the porous carbon material can be determined by analyzing using an adsorption or desorption side of the adsorption isotherm obtained by N2 gas adsorption measurement based on JIS Z 8831-2:2010 (corresponding to JIS Z 8831:2024 and ISO 15901-2: 2022). Vmeso/VT [%] is calculated from these results.

· Measurement of a nitrogen content rate in the porous carbon material

As a result of measuring and analyzing nitrogen content rate of the porous carbon material using X-ray Photoelectron Spectroscopy (XPS), 1.44 % nitrogen atoms were doped with.

· Measurement of biomass content of the porous carbon materials using the accelerator mass spectrometry method (AMS method)

Sample was burned, and the carbon dioxide generated was reduced with hydrogen using an iron catalyst to produce graphite. This graphite was packed into a cathode with an inner diameter of 1mm using a hand press and then fitted into a wheel to be attached to an AMS measurement device. With use of the $^{14}$C-AMS dedicated device (NEC) based on the Tandem accelerator, a $^{14}$C count, a $^{13}$C concentration ($^{13}$C/$^{12}$C), and a $^{14}$C concentration ($^{14}$C /$^{12}$C) were measured. In this case, oxalic acid was used as the standard sample. As the measured value, the biomass degree was calculated using pMC which has been corrected according to ASTM D6866-22. The biomass degree is expressed as a ratio of a $^{14}$C concentration ($^{14}$C/$^{12}$C) of the sample to the $^{14}$C concentration ($^{14}$C/$^{12}$C) of the oxalic acid, which is a standard sample containing [14]C. Specifically, the biomass degree is expressed by the following formula, using numerical values only, excluding % which is a unit:

pMC={$^{14}$C concentration ($^{14}$C/$^{12}$C) of sample/$^{14}$C concentration ($^{14}$C/$^{12}$C) of standard sample}x100

A biomass ratio of the porous carbon material according to Example 1 was 100 pMC.

It is noted that the $^{14}$C concentration ($^{14}$C/$^{12}$C) may refer to the proportion of $^{14}$C among all carbon, that is, the ratio ($^{14}$C/$^{12}$C) of $^{14}$C to [12]C.

For comparison, biomass degrees of artificial graphite (Panasonic, PGF), gelatin (Fujifilm Wako Pure Chemical Corporation), and chitin (Fujifilm Wako Pure Chemical Corporation) were also measured. As a result of the measurement, the biomass degree of artificial graphite derived from petroleum was 0 pMC, while those of gelatin and chitin were 100 pMC.

<Example 2>

The porous carbon material was fabricated using the same procedures and conditions as in Example 1, except that the precursor starting material was processed in a foaming machine for 5 minutes before being placed in the freezer. The porous carbon material was obtained at a yield of 7.3 %.

The specific surface area, nitrogen content rate, and biomass degree of the porous carbon material were measured using the same procedures as in Example 1. The specific surface area $S_{BET}$ of porous carbon material was 1087 $m^2/g$. The nitrogen content rate was 1.44. The biomass degree of the porous carbon material was 100 pMC, since gelatin was used as the starting material.

<Example 3>

A conductive porous material was fabricated using the same procedures and conditions as in Example 2, except that the freezing period in the freezer was changed from 1 day to 7 days. The porous carbon material was obtained at a yield of 9.7 %.

The specific surface area, nitrogen content rate, and biomass degree of the porous carbon material were measured in the same procedures as in Example 1. The specific surface area $S_{BET}$ of the porous carbon material was 1014 $m^2/g$. The nitrogen content rate was 4.75 %. The biomass degree of the porous carbon material was 100 pMC, since gelatin was used as the starting material.

<Example 4>

The porous carbon material was fabricated using the same procedures and conditions as in Example 3, except that a blending ratio (weight ratio) of gelatin, ZnO nanoparticles, and water was changed from 1:1:20 to 1:1:30. The porous carbon material was obtained at a yield of 9.5 %.

The specific surface area, nitrogen content rate, and biomass degree of the porous carbon material were measured in the same procedures as in Example 1. The specific surface area $S_{BET}$ of the porous carbon material was 1374 $m^2/g$. The nitrogen content rate was 3.91 %. The biomass degree of the porous carbon material was 100 pMC since gelatin was used as the starting material.

<Example 5>

The porous carbon material was fabricated using the same procedures and conditions as in Example 2, except that the blending ratio (weight ratio) of gelatin, ZnO nanoparticles, and water was changed from 1:1:20 to 1:0.3:10. The porous carbon material was obtained at a yield of 11.9 %.

The specific surface area, nitrogen content rate, and biomass degree of the porous carbon material were measured in the same procedures as in Example 1. The specific surface area $S_{BET}$ of the porous carbon material was 567 $m^2/g$. The nitrogen content rate was 2.17 %. The biomass degree of the porous carbon material was 100 pMC since gelatin was used as the starting material.

<Example 6>

The porous carbon material was fabricated using the same procedures and conditions as in Example 5, except that the blending ratio (weight ratio) of gelatin, ZnO nanoparticles, and water was changed from 1:0.3:10 to 1:0. 7:10. The porous carbon material was obtained at a yield of 9.3 %.

The specific surface area, nitrogen content rate, and biomass degree of the porous carbon material were measured in the same procedures as in Example 1. The specific surface area $S_{BET}$ of the porous carbon material was 914 $m^2/g$. The nitrogen content rate was 5.15 %. The biomass degree of the porous carbon material was 100 pMC since gelatin was used as the starting material.

<Example 7>

The precursor starting material was prepared at the blending ratio (weight ratio) of gelatin, ZnO nanoparticles, and water of 1:0. 5:10. This was processed in the foaming machine for 5 minutes and then quenched with liquid nitrogen to be frozen for 0.01 hours. The frozen precursor was then placed in an alumina boat-shaped crucible to be heated up to 1000 °C at the temperature rising rate of 10 °C/min under the nitrogen atmosphere ($N^2$ purity:99.99 %, $N^2$ flow 70 ml/min), and was then retained for 2 hours to be calcined. The porous carbon material was obtained at a yield of 8.7 %.

The specific surface area, nitrogen content, and biomass degree of the porous carbon material were measured in the same procedures as in Example 1. The specific surface area $S_{BET}$ of the porous carbon material was 983 m$^2$/g. The nitrogen content rate was 2.34 %. The biomass degree of the porous carbon material was 100 pMC since gelatin was used as the starting material.

<Example 8>

The porous carbon material was fabricated using the same procedures and conditions as in Example 7, except that the blending ratio (weight ratio) of gelatin, ZnO nanoparticles, and water was changed from 1:0. 5:10 to 1:1:10. The porous carbon material was obtained at a yield of 5. 8 %.

The specific surface area, nitrogen content, the biomass degree of the porous carbon material were measured in the same procedures as in Example 1. The specific surface area $S_{BET}$ of the porous carbon material was 1531 m$^2$/g. The nitrogen content rate was 2.40 %. The biomass degree of the porous carbon material was 100 pMC since gelatin was used as the starting material.

<Example 9>

The porous carbon material was fabricated using the same procedures and conditions as in Example 8, except that the blending ratio (weight ratio) of gelatin, ZnO nanoparticles, and water was changed from 1:1:10 to 1:1:8. The porous carbon material was obtained at a yield of 7. 0 %.

The specific surface area, nitrogen content, and biomass degree of the porous carbon material were measured in the same procedures as in Example 1. The specific surface area $S_{BET}$ of the porous carbon material was 1515 m$^2$/g. The nitrogen content rate was 2.68 %. The biomass degree of the porous carbon material was 100 pMC since gelatin was used as the starting material.

<Example 10>

The precursor material was prepared by mixing chitin and ZnO nanoparticles at a blending rate of 1:1. This precursor material was placed in an alumina boat-shaped crucible to be heated up to 950 °C at the temperature rising rate of 5 °C/min under the nitrogen atmosphere (N$^2$ purity:99.99 %, N$^2$ flow 70 ml/min), and was then retained for 6 hours to be calcined. The porous carbon material was obtained at 9.7 %. The specific surface area, the nitrogen content, and the biomass ratio of the porous carbon material were measured in the same procedures as in Example 1. The specific surface area $S_{BET}$ of the porous carbon material was 1710 m$^2$/g. The nitrogen content rate was 1.53 %. The biomass degree of the porous carbon material was 100 pMC since chitin was used as the starting material.

< Example 11>

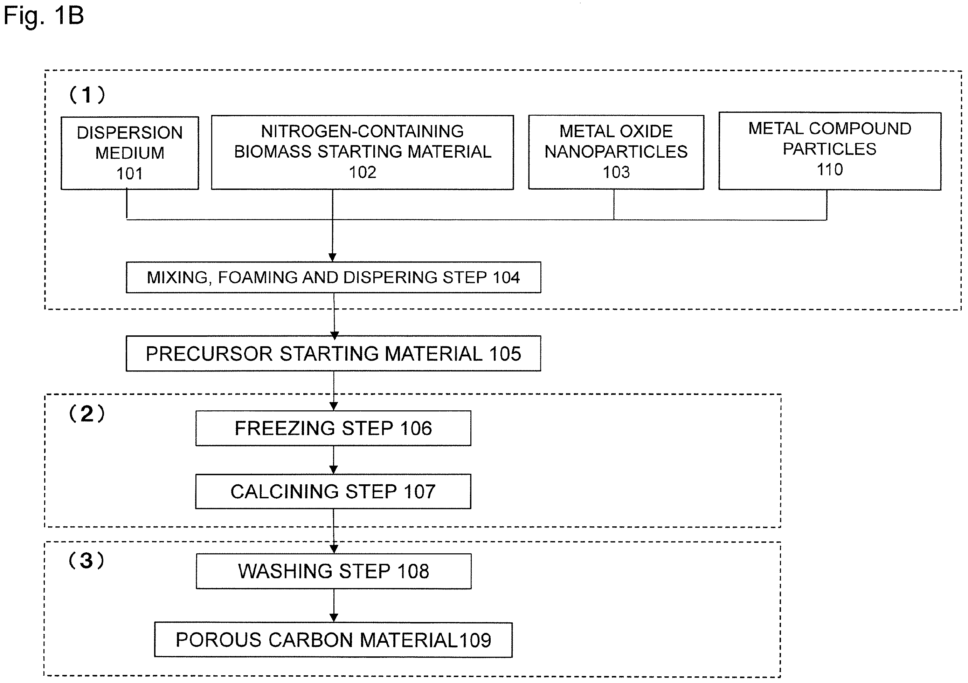

In (1) preparation step of the precursor starting material 105 in the present first embodiment, a part of the metal oxide nanoparticles 103 with the number average particle size of 100 nm or less can be substituted with metal compound particles 110 (Fig. 1B). ZnCl$_2$ particles were used as the metal compound particles 110.

A blending ratio of gelatin, ZnO nanoparticles, ZnCl$_2$, and water (by weight) was set to 1 :1 (ZnO:ZnCl$_2$=1:0.1) to be heated up to 600 °C, in calcining, under the nitrogen atmosphere (N2 Purity:99.99 %, N2 flow 70 ml/min) at the temperature rising rate of 10 °C/min and be then retained for three hours to be heated up to 950 °C, before being retained for 2 hours to be calcined. Except for this, the porous carbon material was fabricated using the same procedures and conditions as in Example 8. The porous carbon material was obtained at a yield of 12.8 %.

The specific surface area, nitrogen content, and biomass degree of the porous carbon material were measured in the same procedures as in Example 1. The specific surface area $S_{BET}$ of the porous carbon material was 1198 m$^2$/g. The nitrogen content rate was 1.11 %. The biomass degree of the porous carbon material was 100 pMC since gelatin was used as the starting material.

<Example 12>

The porous carbon material was fabricated using the same procedures and conditions as in Example 11, except that a blending ratio of ZnO nanoparticles and ZnCl$_2$ was changed to ZnO:ZnCl$_2$=1 :0.3. The porous carbon material was obtained at a yield of 15.3 %.

The specific surface area, nitrogen content, and biomass degree of the porous carbon material were measured in the same procedures as in Example 1. The specific surface area $S_{BET}$ of the porous carbon material was 1151 m$^2$/g. The nitrogen content rate was 1.43 %. The biomass degree of the porous carbon material was 100 pMC since gelatin was used as the starting material.

<Comparative Example 1>

The porous carbon material was fabricated using the same procedures and conditions as in Example 2, except that the freezing time of the precursor starting material in the freezer was changed to 0 hours. The porous carbon material was obtained at a yield of 7.8 %.

The specific surface area, nitrogen content rate, and biomass degree of the porous carbon material were measured in the same procedures as in Example 1. The specific surface area of the carbon material was 405 $m^2$/g, which was a small value. The nitrogen content rate was 0.41 %. The biomass degree of the porous carbon material was 100 pMC since gelatin was used as the starting material.

<Comparative Example 2>

The porous carbon material was fabricated using the same procedures and conditions as in Example 1, except that the blending ratio (weight) of gelatin, ZnO nanoparticles, and water was changed from 1:1:20 to 1:0.3:0 (without water). The porous carbon material was obtained at a yield of 14.7 %.

The specific surface area, nitrogen content rate, and biomass degree of the porous carbon material were measured in the same procedures as in Example 1. The specific surface area of the carbon material was 148 $m^2$/g, which was a very small value. The biomass degree of the porous carbon material was 100 pMC since gelatin was used as the starting material.

<Comparative Example 3>

The porous carbon material was fabricated using the same procedures and conditions as in Example 11, except that the blending ratio of ZnO nanoparticles and $ZnCl_2$ was changed to $ZnO:ZnCl_2=1:0.5$. The porous carbon material was obtained at a yield of 17.5 %.

The specific surface area, nitrogen content rate, and biomass degree of the porous carbon material were measured in the same procedures as in Example 1. The specific surface area $S_{BET}$ of the porous carbon material was 1087 $m^2$/g. The nitrogen content rate was 0.97 %. The biomass degree of the porous carbon material was 100 pMC since gelatin was used as the starting material.

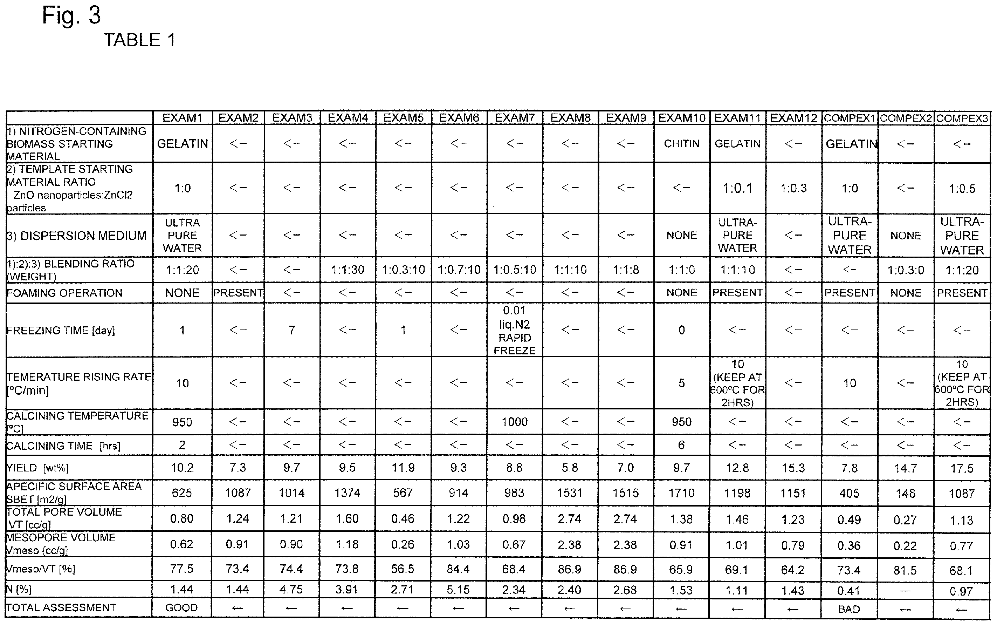

Fig. 3 is a table 1 showing starting materials, producing conditions, and assessment results of Examples 1 to 12 (EXAM1-12) and Comparative Examples 1 to 3 (COMPEX1-3). The leftward arrows (<-) in the table mean the same as the left column.

According to the porous carbon material according to one aspect of the present disclosure, the specific surface area is 500 to 3000 $m^2$/g, the pore diameter is less than 100 nm, the nitrogen content rate is 1 to 15 atomic%, the remainder is the calcined carbon body, and the biomass degree, which is expressed as the ratio of the $^{14}C$ concentration ($^{14}C/^{12}C$) of the calcined body to the $^{14}C$ concentration ($^{14}C/^{12}C$) of the standard sample not derived from fossil fuels when measured by the accelerator mass spectrometry (AMS) method, is in the range of 5 to 100 pMC. Thus, the porous carbon material and the power storage and generation device including the same can be provided.

According to the method for producing a porous carbon material according to one aspect of the present disclosure, there can be provided a method for producing the porous carbon materials at low costs and easily.

According to the method for producing a porous carbon material according to one aspect of the present disclosure, a nitrogen-containing porous carbon material with a large specific surface area, which has thitherto been difficult to obtain quickly and inexpensively, can be easily obtained by an environmentally friendly process using a nitrogen-containing biomass starting material and metal oxide nanoparticles, with the result that the present disclosure has high industrial utility.

The porous carbon material according to one aspect of the present disclosure can be applied to a wide range of uses, for example, as an electrode material for power storage devices such as lithium ion secondary batteries and electric double layer capacitors, and power generation devices such as fuel cells and solar cells.

EXPLANATION OF REFERENCES

101    dispersion medium
102    nitrogen-containing biomass starting material
103    metal oxide nanoparticles
104    mixing, foaming, and dispersing step
105    precursor starting material

106    freezing step
107    calcining step
108    washing step
109    porous carbon material
110    metal compound particles

**Claims**

1.  A porous carbon material comprising a calcined body,

    wherein the calcined body has a specific surface area of 500 to 3000 $m^2/g$, and
    the calcined body includes pores having a pore diameter of 100 nm or less, and
    the calcined body has a nitrogen content rate of 1 to 15 atomic%, with a remainder of the calcined body being carbon, and
    the calcined body has a biomass degree in a range of 5 to 100 pMC, the biomass degree being expressed as a ratio of a $^{14}C$ concentration ($^{14}C/^{12}C$) of the calcined body when measured using accelerator mass spectrometry (AMS) method to the $^{14}C$ concentration ($^{14}C/^{12}C$) of a standard sample not derived from fossil fuels.

2.  The porous carbon material according to claim 1, wherein the pores comprise micropores having a pore diameter of 2 nm or less and mesopores having a pore diameter of 2 nm or more to 50 nm or less.

3.  The porous carbon material according to claim 2, wherein the pores further comprise macropores having a pore diameter of 100 nm or more.

4.  An electrode comprising the porous carbon material according to claim 1.

5.  A device for storing or generating electricity comprising the electrode according to claim 4.

6.  A method for producing a porous carbon material comprising:

    (1) preparing a precursor starting material by mixing, foaming, and dispersing a dispersion medium, a nitrogen-containing biomass starting material, and metal oxide nanoparticles as template particles with a number average particle size of 100 nm or less;
    (2) calcining and graphitizing the precursor starting material to obtain a calcined body; and
    (3) removing the metal oxide nanoparticles from the calcined body to obtain the porous carbon material.

7.  The method for producing a porous carbon material according to claim 6, wherein the metal oxide nanoparticles as the template particles are ZnO particles.

8.  The method for producing a porous carbon material according to claim 6, wherein the nitrogen-containing biomass starting material is at least one or more selected from a group consisting of natural sugars, proteins, and nucleic acids.

9.  The method for producing a porous carbon material according to claim 6, wherein the nitrogen-containing biomass starting material is at least one or more selected from a group consisting of gelatin, chitin, chitosan, glucosamine, deoxyribonucleic acid (DNA), ribonucleic acid (RNA).

10. The method for producing a porous carbon material according to claim 6, wherein produced porous carbon material has a biomass degree of the nitrogen-containing biomass starting material is in a range of 5 to 100 pMC, the biomass degree being expressed as a ratio of a $^{14}C$ concentration ($^{14}C/^{12}C$) of the nitrogen-containing biomass starting material as measured using accelerator mass spectrometry (AMS) method to the $^{14}C$ concentration ($^{14}C/^{12}C$) of a standard sample not derived from fossil fuels.

11. The method for producing a porous carbon material according to claim 6, wherein metal compound particles other than metal oxides are added as the precursor starting materials.

12. The method for producing a porous carbon material according to claim 11, wherein the metal compound particles are $ZnCl_2$ particles.

Fig. 1A

(1)

| DISPERSION MEDIUM 101 | NITROGEN-CONTAINING BIOMASS STARTING MATERIAL 102 | METAL OXIDE NANOPARTICLES 103 |

MIXING, FOAMING AND DISPERING STEP 104

PRECURSOR STARTING MATERIAL 105

(2)

FREEZING STEP 106

CALCINING STEP 107

(3)

WASHING STEP 108

POROUS CARBON MATERIAL109

EP 4 741 339 A1

Fig. 1B

EP 4 741 339 A1

（1）

| DISPERSION MEDIUM 101 | NITROGEN-CONTAINING BIOMASS STARTING MATERIAL 102 | METAL OXIDE NANOPARTICLES 103 | METAL COMPOUND PARTICLES 110 |

MIXING, FOAMING AND DISPERING STEP 104

PRECURSOR STARTING MATERIAL 105

（2）

FREEZING STEP 106

CALCINING STEP 107

（3）

WASHING STEP 108

POROUS CARBON MATERIAL109

Fig. 2A

IUPAC CLASSIFICATION

| PORE DIAMETER | NAME |
|---------------|-----------|
| ~2nm | MICROPORE |
| 2~50nm | MESOPORE |
| 50nm~ | MACROPORE |

Fig. 2B

MICROPORE

MACRO-
PORE

MESOPORE

# Fig. 3

## TABLE 1

| | EXAM1 | EXAM2 | EXAM3 | EXAM4 | EXAM5 | EXAM6 | EXAM7 | EXAM8 | EXAM9 | EXAM10 | EXAM11 | EXAM12 | COMPEX1 | COMPEX2 | COMPEX3 |
|---|---|---|---|---|---|---|---|---|---|---|---|---|---|---|---|
| 1) NITROGEN-CONTAINING BIOMASS STARTING MATERIAL | GELATIN | <− | <− | <− | <− | <− | <− | <− | <− | CHITIN | GELATIN | <− | GELATIN | <− | <− |
| 2) TEMPLATE STARTING MATERIAL RATIO ZnO nanoparticles:ZnCl2 particles | 1:0 | <− | <− | <− | <− | <− | <− | <− | <− | <− | 1:0.1 | 1:0.3 | 1:0 | <− | 1:0.5 |
| 3) DISPERSION MEDIUM | ULTRA PURE WATER | <− | <− | <− | <− | <− | <− | <− | <− | NONE | ULTRA-PURE WATER | <− | ULTRA-PURE WATER | NONE | ULTRA-PURE WATER |
| 1):2):3) BLENDING RATIO (WEIGHT) | 1:1:20 | <− | <− | 1:1:30 | 1:0.3:10 | 1:0.7:10 | 1:0.5:10 | 1:1:10 | 1:1:8 | 1:1:0 | 1:1:10 | <− | <− | 1:0.3:0 | 1:1:20 |
| FOAMING OPERATION | NONE | PRESENT | <− | <− | <− | <− | <− | <− | <− | NONE | PRESENT | <− | PRESENT | NONE | PRESENT |
| FREEZING TIME [day] | 1 | <− | 7 | <− | 1 | <− | 0.01 liq.N2 RAPID FREEZE | <− | <− | 0 | <− | <− | <− | <− | <− |
| TEMERATURE RISING RATE [°C/min] | 10 | <− | <− | <− | <− | <− | <− | <− | <− | 5 | 10 (KEEP AT 600°C FOR 2HRS) | <− | 10 | <− | 10 (KEEP AT 600°C FOR 2HRS) |
| CALCINING TEMPERATURE [°C] | 950 | <− | <− | <− | <− | <− | 1000 | <− | <− | 950 | <− | <− | <− | <− | <− |
| CALCINING TIME [hrs] | 2 | <− | <− | <− | <− | <− | <− | <− | <− | 6 | <− | <− | <− | <− | <− |
| YIELD [wt%] | 10.2 | 7.3 | 9.7 | 9.5 | 11.9 | 9.3 | 8.8 | 5.8 | 7.0 | 9.7 | 12.8 | 15.3 | 7.8 | 14.7 | 17.5 |
| APECIFIC SURFACE AREA SBET [m2/g] | 625 | 1087 | 1014 | 1374 | 567 | 914 | 983 | 1531 | 1515 | 1710 | 1198 | 1151 | 405 | 148 | 1087 |
| TOTAL PORE VOLUME VT [cc/g] | 0.80 | 1.24 | 1.21 | 1.60 | 0.46 | 1.22 | 0.98 | 2.74 | 2.74 | 1.38 | 1.46 | 1.23 | 0.49 | 0.27 | 1.13 |
| MESOPORE VOLUME Vmeso [cc/g] | 0.62 | 0.91 | 0.90 | 1.18 | 0.26 | 1.03 | 0.67 | 2.38 | 2.38 | 0.91 | 1.01 | 0.79 | 0.36 | 0.22 | 0.77 |
| Vmeso/VT [%] | 77.5 | 73.4 | 74.4 | 73.8 | 56.5 | 84.4 | 68.4 | 86.9 | 86.9 | 65.9 | 69.1 | 64.2 | 73.4 | 81.5 | 68.1 |
| N [%] | 1.44 | 1.44 | 4.75 | 3.91 | 2.71 | 5.15 | 2.34 | 2.40 | 2.68 | 1.53 | 1.11 | 1.43 | 0.41 | — | 0.97 |
| TOTAL ASSESSMENT | GOOD | ← | ← | ← | ← | ← | ← | ← | ← | ← | ← | ← | BAD | ← | ← |

EP 4 741 339 A1

## INTERNATIONAL SEARCH REPORT

| International application No. |
| --- |
| **PCT/JP2024/021743** |

| A. | CLASSIFICATION OF SUBJECT MATTER |
| --- | --- |

*C01B 32/05*(2017.01)i; *H01G 11/32*(2013.01)i; *H01G 11/34*(2013.01)i; *H01G 11/42*(2013.01)i; *H01G 11/44*(2013.01)i; *H01G 11/86*(2013.01)i; *H01M 4/587*(2010.01)i; *H01M 4/88*(2006.01)i; *H01M 4/96*(2006.01)i
FI: C01B32/05; H01G11/32; H01G11/34; H01G11/42; H01G11/44; H01G11/86; H01M4/587; H01M4/88 C; H01M4/96 B

According to International Patent Classification (IPC) or to both national classification and IPC

| B. | FIELDS SEARCHED |
| --- | --- |

Minimum documentation searched (classification system followed by classification symbols)

C01B32/05; H01G11/32; H01G11/34; H01G11/42; H01G11/44; H01G11/86; H01M4/587; H01M4/88; H01M4/96

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-088119 A (UNIV GUNMA) 04 June 2020 (2020-06-04) claims 1-4, paragraphs [0029], [0033]-[0088] | 1-5 |
| A | | 6-12 |
| A | JP 2023-074680 A (UNIV KANSAI) 30 May 2023 (2023-05-30) entire text, all drawings | 1-12 |
| A | CN 113998697 A (UNIV CHINA MINING) 01 February 2022 (2022-02-01) entire text, all drawings | 1-12 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 August 2024** | **27 August 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/021743**

| Patent document cited in search report | | | Publication date (day/month/year) | Patent family member(s) | Publication date (day/month/year) |
|---|---|---|---|---|---|
| JP | 2020-088119 | A | 04 June 2020 | (Family: none) | |
| JP | 2023-074680 | A | 30 May 2023 | (Family: none) | |
| CN | 113998697 | A | 01 February 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5168585 B
- JP 2021038103 A
- JP 2019102711 A
- JP 2021084819 A